# EUROPÄISCHE PATENTSCHRIFT

(11) **EP 4 450 733 B1**
(45) Veröffentlichungstag und Bekanntmachung des Hinweises auf die Patenterteilung: **03.12.2025**
(21) Anmeldenummer: 23217277.5
(22) Anmeldetag: 15.12.2023
(51) Int. Cl.: E04F 13/08

(54) **THERMISCH ISOLIERENDE HALTERUNG FÜR FASSADEN**
THERMALLY INSULATING SUPPORT FOR FAÇADES
SUPPORT ISOLANT THERMIQUE POUR FAÇADES

(43) Veröffentlichungstag der Anmeldung: 23.10.2024
(73) Patentinhaber: Ineco Holding AG, 8852 Altendorf (CH)
(72) Erfinder: Bregenzer, Samuel, 8633 Wolfhausen (CH); Studer, Joel, 8636 Wald (CH)
(74) Vertreter: Keller Schneider Patent- und Markenanwälte AG

(56) Entgegenhaltungen:
- EP-A1- 2 180 115
- DE-A1- 102012 016 025
- DE-A1- 2 113 741

## Beschreibung

### Technisches Gebiet

Die Erfindung betrifft eine thermisch isolierende Halterung zum Befestigen eines Vorbaus, z. B. eines Fassadenplattensystems, an einem Tragwerk wie z.B. einer Gebäudeaussenwand.

### Stand der Technik

Aus der US 2004/123550 A1 (Hartmann) ist ein Bauplattenbefestigungssystem mit verbesserter Energieeffizienz bzw. verbesserten Brandschutzeigenschaften bekannt. Die Platten werden mit einem strukturellen Winkel-Träger verbunden. Der Winkel-Träger hat einen Fussteil und einen Kopfteil aus Aluminium. Ein Steg verbindet Fussteil und Kopfteil. Der Steg kann ebenfalls aus Metall bestehen, oder er kann durch eine wärmeisolierende Platte gebildet sein. Als wärmeisolierendes Material wird ein Verbundwerkstoff bestehend aus Endlosstrangmatte und Glasfaserroving mit Phenolharzmatrix eingesetzt.

Aus der EP 2'180'115 B1 (Wagner System AG) ist eine thermisch isolierte Fassadenkonstruktion bekannt. Die Konstruktion verwendet einen Verbindungsteil zwischen Fassade und Tragwerk, der einen Fussteil, einen Kopfteil und eine Distanzplatte hat. Fussteil und Kopfteil bestehen aus einem zurückgebogenen Aluminium- oder Edelstahlblech. Die Distanzplatte ist thermisch isolierend und besteht aus glasfaserverstärktem Kunststoff (GFK). Sie überbrückt im Wesentlichen den Raum zwischen Tragwerk und Fassade.

Der Nachteil der bekannten Systeme besteht darin, dass sie entweder thermisch isolierend aber nicht brandfest oder brandfest aber wenig thermisch isolierend sind.

### Darstellung der Erfindung

Aufgabe der Erfindung ist es, eine dem eingangs genannten technischen Gebiet zugehörende Halterung zum Befestigen eines Vorbaus an einem Tragwerk zu schaffen, die sowohl thermisch isolierend als auch brandfest ist.

Die Lösung der Aufgabe ist durch die Merkmale des Anspruchs 1 definiert. Gemäss der Erfindung weist die thermisch isolierende Halterung folgende Komponenten auf:
a) einen Fussteil, der eine Fussfläche zur stabilen Auflage am Tragwerk und einen zur Fussfläche senkrecht stehenden Distanzplattenhalter hat;
b) eine Distanzplatte aus einem thermisch isolierenden Material, wobei die Distanzplatte einen inneren Endbereich und einen äusseren Endbereich hat und wobei die Distanzplatte an ihrem inneren Endbereich mindestens zwei durchgehende Löcher hat;
c) mindestens zwei Stiftverbindungen, welche jeweils eines der mindestens zwei Löcher durchstossen und eine mechanisch tragfähige Verbindung zwischen dem Distanzplattenhalter des Fussteils und der Distanzplatte schaffen;
d) wobei die Distanzplatte ein Schichtpressstoff ist, der im Wesentlichen aus Muskovit-Glimmerpapier-Schichten zur Sicherstellung einer hohen Zugfestigkeit des Schichtpressstoffes und aus Silikonharz-Bindemittel als Matrix zum festen Verbinden der Glimmerpapier-Schichten besteht.

Die Merkmale a) bis c) sind aus der der EP 2' 180' 115 B1 bekannt.

Der Fussteil ist dazu ausgebildet, auf dem Tragwerk stabil befestigt zu werden, zum Beispiel mit einem Dübelanker. Die Fussfläche stellt eine stabile Ausrichtung sicher. Der Distanzplattenhalter ist ein Bereich des Fussteils, der dazu ausgebildet ist, die Distanzplatte zu halten. Dabei soll die Distanzplatte im Wesentlichen senkrecht zur Fussfläche und damit zum Tragwerk (z.B. Gebäudewand) stehen.

Die Distanzplatte ist des Kernelement für die thermische Isolation. Das Material soll eine Wärmeleitfähigkeit von weniger als 1 W/m.K haben. Gute Werte liegen im Bereich von 0.25 W/m.K und weniger. Das Material ist im Wesentlichen unbrennbar, das heisst, auch bei Beflammung brennt es nicht. Vorzugsweise ist das Material stabil bis 500 °C. Die Löcher am inneren Endbereich haben eine beliebige Form. Bevorzugt ist aber eine runde Form.

Die mindestens zwei Stiftverbindungen, welche jeweils eines der mindestens zwei Löcher durchstossen, sollen die Distanzplatte als Ganzes einspannen und halten.

### Vorteile

Der erfindungsgemässe Schichtpressstoff ist mechanisch belastbar, thermisch isolierend und unbrennbar. Dies hat den Vorteil, dass die Halterung ohne weiteres für Gebäude eingesetzt werden kann, bei denen die Fassadenkonstruktion thermisch isolierend sein muss, aber keine brennbaren Materialien enthalten darf (z.B. bei Hochhäusern).

Weiter hat die erfindungsgemässe Halterung den Vorteil, dass sie produktionstechnisch sehr einfach an unterschiedliche Abstände angepasst werden kann. Es genügt, zwischen standardisiertem Fussteil und Kopfteil eine passend abgelängte Distanzplatte einzusetzen. So können mit einem Typ von Kopf- und Fussteil unterschiedliche Baulängen der Halterung erstellt werden.

Weiter hat das erfindungsgemässe Material den Vorteil, dass es produktionstechnisch einfach und schnell verarbeitbar ist.

Der Schichtpressstoff wird beispielsweise dadurch hergestellt, dass eine grosse Zahl von Muskovit-Glimmerpapier-Schichten (wie sie z.B. aus der DE 11 02 548 B; General Electric bekannt sind) mit dem Silikonharz-Bindemittel getränkt und dann in einer Presse mit Wärme zu einem Verbundwerkstoff verbunden werden. Der daraus resultierende Schichtpressstoff besteht im Wesentlichen nur aus mineralischem Muskovit-Glimmer und aus Silikonharz-Bindemittel. Diese beiden Komponenten machen z.B. mindestens 99 Gew.-% der Zusammensetzung des Schichtpressstoffes aus. Die übrigen Komponenten sind typischerweise natürliche Verunreinigungen im Muskovit-Glimmer und allfällige Spuren von chemischen Stoffen des Herstellungsprozesses.

In der nachfolgenden Beschreibung werden - beginnend mit der Nummerierung 2 - verschiedene besondere Ausführungsarten der Erfindung erläutert.

### Ausführungsart 2: mindestens 85 Gew.-% Muskovit-Glimmer

Gemäss einer besonderen Ausführungsart der Erfindung machen die Muskovit-Glimmerpapier-Schichten einen Anteil von mindestens 85 Gew.-% des Schichtpressstoffs aus. Der Anteil an Silikonharz-Bindemittel beträgt mit Vorteil nicht mehr als 15 Gew.-% des Schichtpressstoffs. Die Spuren von chemischen Stoffen des Herstellungsprozesses im Schichtpressstoff sollen hierbei möglichst gering sein und beispielswese 1 Gew.-% des Schichtpressstoffs nicht überschreiten.

Der Schichtpressstoff kann geringfügige Anteile von anderen Bestandteilen enthalten, z.B. von Kaliumsilikat, das die Zugfestigkeit von Muskovit-Glimmerpapier erhöht (wie z.B. aus der DE 11 02 548 B; General Electric bekannt).

Abweichend zur obigen Ausführungsart liegen im Rahmen der Erfindung auch Schichtpressstoffe, die weniger Muskovit-Glimmerpapier enthalten, z.B. 80 Gew.-%. Entsprechend kann der Anteil des Silikonharzes z.B. bei rund 20 Gew.-% sein. Weil das Glimmerpapier eine deutlich höhere Hitzebeständigkeit hat als das Silikonharz, wird bei einer Reduktion des Glimmerpapier-Anteils die Hitzebeständigkeit des Schichtpressstoffes tendenziell geringer werden.

### Ausführungsart 3: Mindestens 2 Gew.-% Silikonharz

Gemäss einer besonderen Ausführungsart der Erfindung macht das Silikonharz-Bindemittel einen Anteil von mindestens 2 Gew.-% vom Schichtpressstoff aus. Vorzugsweise ist der Silikonharz-Anteil möglichst gering und gleichzeitig der mineralische Anteil im Schichtpressstoff möglichst hoch.

Es hat sich herausgestellt, dass ein Schichtpressstoff mit einem Silikonharz-Anteil von mindestens 8 Gew.-% und maximal 12 Gew.-% eine besonders gute Kombination aus Zugfestigkeit, Hitzebeständigkeit und niedriger Wärmeleitfähigkeit aufweist. Die Zugfestigkeit liegt beispielsweise bei ca. 180 MPa und der Zug-Modul bei ca. 62 GPa (nach ISO 527). Die Wärmeleitfähigkeit liegt bei ca. 0.18 W/m.K (ISO 8301). Die Einsatztemperatur liegt bei ca. 500°C und die kurzzeitige maximale Einsatztemperatur bei ca. 800°C.

Diese Menge an Bindemittel stellt sicher, dass die Muskovit-Glimmerpapiere zuverlässig miteinander verbunden sind. Dadurch erreicht der Schichtenverbund die gewünschte mechanische Belastbarkeit (Zugfestigkeit).

Grundsätzlich soll der Schichtpressstoff so wenig Silikonharz wie nötig enthalten. Das heisst, der mineralische Anteil (Glimmerbestandteil) soll möglichst hoch sein.

Abweichend zur obigen Ausführungsart liegen im Rahmen der Erfindung auch Silikonharz-Anteile von unter 2 Gew.-%.

### Ausführungsart 4: Distanzplatte hat L zu D im Bereich 5-100

Gemäss einer besonderen Ausführungsart der Erfindung hat die Distanzplatte ein Verhältnis von Länge zu Dicke zwischen 5 und 100, insbesondere von mindestens 10. Das heisst, die Distanzplatte ist dünn. Je geringer der Querschnitt der Distanzplatte, desto geringer der Wärmeabfluss durch die Platte. Folglich können mit der Halterung hohe Dämmwerte eingehalten werden.

Abweichend zur obigen Ausführungsart liegen im Rahmen der Erfindung auch Verhältnisse von Länge zu Dicke grösser als 100. Allerdings ist dann die mechanische Stabilität der Distanzplatte eher gering und somit braucht es mehr Halterungen pro Quadratmeter Fassade. Dies kann zu einem suboptimalen Dämmwert für die ganze Gebäudestruktur führen. Dieser Effekt ist insbesondere bei hohen Isolationsvorgaben für die Fassade spürbar.

### Ausführungsart 5: Konstante Dicke der Distanzplatte im Bereich 2 - 10 mm

Gemäss einer besonderen Ausführungsart der Erfindung hat die Distanzplatte eine konstante Dicke. Diese ist vorzugsweise im Bereich von 2 mm bis 10 mm. Bei einer Dicke unterhalb von 2 mm wird die stabile Länge der Distanzplatte zu kurz. Die von der Halterung maximal überbrückbare Distanz zwischen Tragwerk und Vorbau wird dann kurz. Für dicke Dämmschichten von z.B. 200 mm sind derart dünne Distanzplatten nicht mehr sehr effizient.

Abweichend zur obigen Ausführungsart liegen im Rahmen der Erfindung auch Distanzplatten, die deutlich dicker als 10 mm sind. Mit ihnen lassen sich zwar mechanisch stabil grosse Distanzen überwinden. Allerdings ist dann der Wärmeabfluss aufgrund des relativ grossen Querschnitts erhöht. Die Dicke der Isolationsschicht liegt nämlich meistens unter ca. 220 mm. Der Gewinn an mechanischer Stabilität wird dann durch einen erhöhten Wärmeabfluss erkauft.

### Ausführungsart 6: Distanzplatte rechteckig

Gemäss einer besonderen Ausführungsart der Erfindung hat die Distanzplatte eine im Wesentlichen rechteckige Aussenkontur. Eine solche Form bringt typischerweise eine optimale Ausnutzung des Materials mit sich. Das heisst, der Verbrauch an Distanzplattenmaterial für eine isolierte Gebäudehülle ist vorteilhaft gering. Zudem sind solche Platten einfach herstellbar durch Abschneiden eines Stücks von einer langen, streifenförmigen Materialplatte.

Abweichend zur obigen Ausführungsart liegen im Rahmen der Erfindung auch Distanzplatten mit einer anderen Aussenkontur, wie z.B. einer trapezförmigen Aussenkontur.

### Ausführungsart 7: Distanzplatte hat Ausnehmung

Bei einer besonderen Ausführungsform der Erfindung hat die Distanzplatte an ihrem inneren Endbereich eine Ausnehmung. Diese Ausnehmung ermöglicht es, ein zentriertes Loch im Fussteil vorzusehen. Das zentrierte Loch dient dazu, den Fussteil durch einen Dübelanker am Tragwerk zu fixieren. Der Schraubenkopf des Dübelankers ist aufgrund der Ausnehmung in der Distanzplatte zugänglich. Die Ausnehmung ist z.B. keilförmig oder rechteckig.

Abweichend zur obigen Ausführungsart kann es auch vorteilhaft sein, wenn die Distanzplatte eine geschlossene Rechteckfläche bildet (d.h. geschlossen abgesehen von den Löchern für die Stiftverbindungen zum Fussteil). Solche Distanzplatten sind besonders einfach in der Herstellung.

Es ist auch nicht ausgeschlossen, dass zwei oder mehr Ausnehmungen in der Distanzplatte vorgesehen sind, z.B. um Gewicht zu sparen oder für besondere Montagezwecke.

### Ausführungsart 8: u-Profil am Fussteil

Gemäss einer besonderen Ausführungsart der Erfindung bildet der Distanzplattenhalter des Fussteils mindestens ein u-Profil. Dabei hat das u-Profil eine Schlitzbreite, die der Dicke der Distanzplatte entspricht, so dass die Distanzplatte in der Produktion der Halterung in das u-Profil eingeschoben werden kann. Die mindestens zwei Stiftverbindungen durchdringen das u-Profil (d.h. beide Flanken des u-Profils). Vorzugsweise sind u-Profil und Distanzplatte in der Dicke so aufeinander angepasst, dass die Distanzplatte mit beiden Flanken des u-Profils geklemmt wird, wenn die Stiftverbindung angebracht ist. Bei der vorliegenden Ausführungsart kann ein einziges durchgehendes u-Profil vorgesehen sein, oder es können z.B. zwei miteinander fluchtende u-Profile vorgesehen sein.

Abweichend zur obigen Ausführungsart ist es auch im Rahmen der Erfindung, dass anstelle des u-Profils ein flacher Anschluss vorgesehen ist, in dem Sinn, dass die Distanzplatte einseitig an ein plattenförmiges Ende des Fussteils fixiert wird.

### Ausführungsart 9: Kopfteil

Gemäss einer besonderen Ausführungsart der Erfindung hat die Halterung als weitere Komponente einen Kopfteil mit einem Anschlussteil. Der Anschlussteil ist mit mindestens zwei Stiftverbindung am äusseren Endbereich der Distanzplatte mechanisch tragfähig befestigt.

Der Kopfteil dient dazu, das Fassadensystem an der Halterung zu befestigen. Durch diesen Aufbau der Halterung kann der Hersteller die Halterung an unterschiedliche Fassadensysteme anpassen. Bei der Bestellung der Halterung teilt der Kunde mit, an welches Fassadensystem die Halterung angepasst sein soll. Der Hersteller kann dann einen standardisierten Fussteil mit Distanzplatte kombinieren und am äusseren Ende der Distanzplatte den passenden Kopfteil anbringen.

Abweichend zur obigen Ausführungsart liegen im Rahmen der Erfindung auch Halterungen, die nur aus Fussteil und Distanzplatte bestehen. Falls der Hersteller somit keine Kopfteile anbietet, ist es dem Anwender überlassen, wie er das Fassadensystem an der Distanzplatte befestigt. Der Fassadenhersteller kann dann seine bevorzugten Befestigungsteile als Verbindung zur Distanzplatte vorsehen.

### Ausführungsart 10: u-Profil am Kopfteil

Gemäss einer besonderen Ausführungsart der Erfindung, bildet der Anschlussteil des Kopfteils mindestens ein u-Profil, das den äusseren Endbereich der Distanzplatte beidseitig umgreift. Dieses u-Profil ist in gleicher Weise an die Dicke der Distanzplatte angepasst wie das u-Profil des Fussteils. Es ist ebenfalls beidseitig durchdrungen von einer Stiftverbindung, welche das Kopfteil mit der Distanzplatte verbindet. Indem das u-Profil die Distanzplatte beidseitig einfasst, ist eine mechanisch sehr tragfähige Verbindung mit der Distanzplatte sichergestellt.

Abweichend zur obigen Ausführungsart liegen im Rahmen der Erfindung auch Kopfteile, die z.B. im Wesentlichen nur eine flache Platte oder ein T-Profil bilden. Dann kann mit einer einseitigen Verbindung (d.h. Distanzplatte und Kopfteil werden seitlich aneinander angelegt und mit einer durchgehenden Stiftverbindung verbunden) eine kostengünstig realisierbare Lösung geschaffen werden.

### Ausführungsart 11: Adapterelement am Kopfteil

Bei einer besonderen Ausführungsart der Erfindung weist der Kopfteil mindestens ein Adapterelement zum Befestigen des Vorbaus an der Halterung auf. Das Adapterelement hat z.B. die Form eines Klemmfingers, eines Einschubschlitzes oder eines c-Profils. Das Adapterelement kann auch ein gezielt platziertes Loch zum Festschrauben eines Trägers der Unterkonstruktion der Fassade sein. Das heisst, der Kopfteil ist in der physischen Gestalt an die Fassadenunterkonstruktion angepasst. Das Adapterelement kann z.B. so ausgebildet sein, dass ein Träger provisorisch festgeklemmt werden kann, bevor er permanent fixiert wird.

Abweichend zur obigen Ausführungsart liegen im Rahmen der Erfindung auch Kopfteile, die im Wesentlichen als einfache rechteckige Platten (aber zumindest mit Löchern für die Stiftverbindung zur Distanzplatte) ausgebildet sind.

### Ausführungsart 12: Nietverbindungen

Gemäss einer besonders bevorzugten Ausführungsform sind die Stiftverbindungen als Nieten ausgeführt. Wenn der Fuss- bzw. Kopfteil ein u-Profil bilden, dann kommt es nicht darauf an, auf welcher Seite der Kopf der Niete ist.

Abweichend zur obigen Ausführungsart liegen im Rahmen der Erfindung auch Stiftverbindungen in Form von Schraube und Mutter oder anderen Klemmmitteln.

### Ausführungsart 13. Fussteil spiegelsymmetrisch

Bei einer besonderen Ausführungsart der Erfindung ist der Fussteil spiegelsymmetrisch bezüglich einer Ebene senkrecht zur Fussfläche. Insbesondere sind die Öffnungen für die Dübelanker spiegelsymmetrisch bezüglich der Mittelebene, die durch die Distanzplatte definiert wird. Dies ist für die Statik der Halterung vorteilhaft.

Abweichend zur obigen Ausführungsart liegen im Rahmen der Erfindung auch nichtspiegelsymmetrische Fussteile. In der Praxis wird es häufig nötig sein, einzelne Halterungen asymmetrisch auszubilden, um einer Besonderheit der Fassade gerecht zu werden. So wird es häufig auch L-förmige Fussteile für eine Fassade brauchen. Wenn die Halterung aber nicht spiegelsymmetrisch ist und eine aussermittige Öffnung für den Dübelanker benötigt, wird aber angestrebt, die Asymmetrie so gering wie möglich zu halten, um die dadurch zunehmenden Momente auf den Dübelanker nicht zu gross werden zu lassen.

### Ausführungsart 14: Aluminium-Strangpress-Profil

Bei einer besonderen Ausführungsart der Erfindung ist der Fussteil aus einem Aluminium-Strangpress-Profil-Stück gebildet. Ein einzelner Fussteil kann somit ganz einfach dadurch hergestellt werden, dass von einem langen Profil ein Stück der benötigten Länge abgeschnitten wird.

In analoger Weise kann auch der Kopfteil aus einem Aluminium-Strangpress-Profil-Stück gebildet sein.

Die erfindungsgemässe Halterung kann mit geringem technischen Aufwand konfektioniert werden. Fussteil, Kopfteil und Distanzplatte werden durch Abschneiden eines Stücks von einem langen Profil bzw. einem langen Materialstreifen vorbereitet. Dann werden Löcher für die Dübelanker am Fussteil gebohrt. Unter Umständen werden noch gewisse Teile am Strangpressprofil gekürzt. Soweit nötig werden am Kopfteil die Adapterelemente (z.B. ein Steckschlitz, ein Loch für eine Stiftverbindung) angebracht. An der Distanzplatte werden die Löcher für die Stiftverbindungen angebracht. Schliesslich werden die Teile mit der vorgesehenen Anzahl von Stiftverbindungen miteinander verbunden.

Abweichend zur obigen Ausführungsart liegen im Rahmen der Erfindung auch Kopf- und Fussteile, die aus einem Streifen Stahlblech geformt werden, wie es an sich aus dem eingangs zitierten Stand der Technik bekannt ist.

### Bauwerk mit Halterungen

Aufgabe der Erfindung ist es weiter, ein isoliertes Bauwerk mit einer Fassade bereitzustellen, das aussenseitig sowohl thermisch isoliert als auch brandfest ist.

Gemäss der Erfindung wird die gestellte Aufgabe gelöst durch ein Bauwerk mit einem Tragwerk, insbesondere einer Gebäudewand (z.B. aus Beton oder Backstein), einer Aussenisolation am Tragwerk (z.B. einer mineralischen Dämmmatte an der Gebäudewand) und einem Vorbau, insbesondere einem Fassadenplattensystem, und einer erfindungsgemässen thermisch isolierenden Halterung. Die Halterung verankert den Vorbau am Tragwerk.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine bevorzugte Ausführungsform der erfindungsgemässen Halterung mit vollflächiger Distanzplatte;
- Fig. 2: eine schematische Darstellung eines Querschnitts einer erfindungsgemässen Distanzplatte gemäss Fig. 1;
- Fig. 3: eine zweite bevorzugte Ausführungsform der erfindungsgemässen Halterung mit einer Distanzplatte mit einer Ausnehmung;
- Fig. 4: eine schematische Darstellung eines Bauwerks mit erfindungsgemässer Halterung.

Grundsätzlich sind in den Figuren gleiche Teile mit gleichen Bezugszeichen versehen.

### Wege zur Ausführung der Erfindung

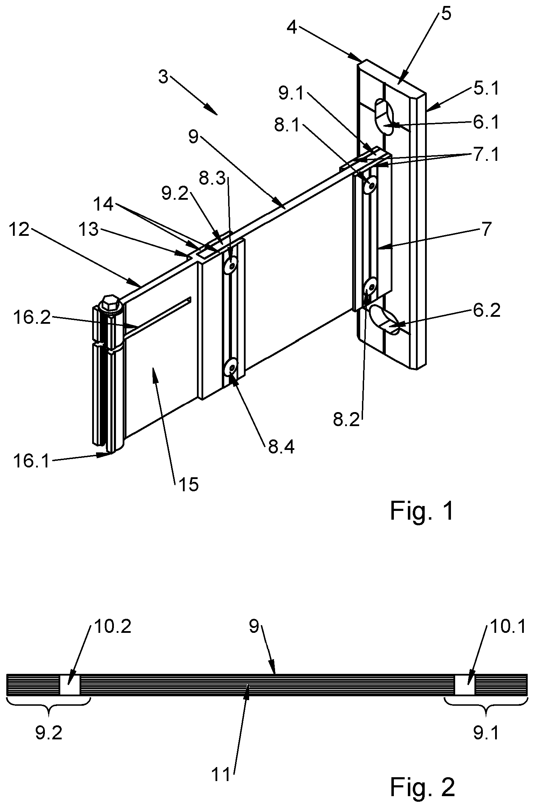

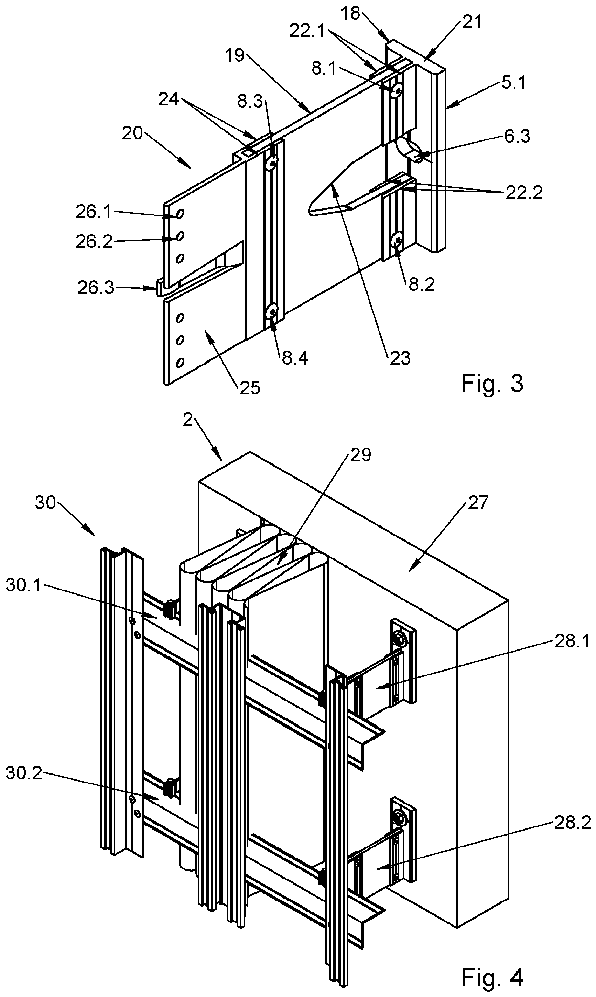

Die in **Fig. 1** gezeigte Halterung 3 besteht aus einem Fussteil 4, einer Distanzplatte 9 und einem Kopfteil 12. Fussteil 4 und Distanzplatte 9 sind über 2 Stiftverbindungen 8.1, 8.2 mechanisch fest verbunden. In gleicher Weise sind Distanzplatte 9 und Kopfteil 12 über zwei Stiftverbindungen 8.3 und 8.4 miteinander verbunden. Die Halterung 3 wird in dieser Form z.B. vom Hersteller bereitgestellt und vom Bauarbeiter auf der Baustelle am Gebäude montiert (siehe Fig. 4).

Der Fussteil 4 ist entsprechend der Ausführungsart 14 im Wesentlichen aus einem Aluminium-Strangpressprofil gefertigt.

Der Fussteil hat eine Fussplatte 5 in der Form eines langen rechteckigen Streifens, der bei montierter Halterung 3 vertikal ausgerichtet ist. In dieser Ausrichtung ist beim oberen Ende der Fussplatte 5 ein erstes Loch 6.1 und beim unteren Ende der Fussplatte 5 ein zweites Loch 6.2 vorhanden. Das obere Loch 6.1 ist vorliegend ein Langloch mit vertikaler Längsachse; das untere Loch 6.2 ist ein Langloch mit horizontaler Längsachse, was eine präzise Justierung der Fussplatte 5 am Tragwerk erlaubt.

Zwischen den beiden Löchern 6.1, 6.2 ist in vertikaler Richtung (Montageorientierung) ein Distanzplattenhalter 7 gebildet, der senkrecht zur Fussfläche 5.1 steht und von der Fussplatte 5 weg ragt. Gemäss der Ausführungsart 8 der Erfindung bildet er ein u-Profil 7.1. Dazu sind an der Fussplatte 5 (gegenüberliegend zur Fussfläche 5.1) zwei Streifen vorhanden, die senkrecht von der Fussplatte abstehen und in gegenseitigem Abstand stehen. Zwischen den beiden beabstandeten Streifen (welche die Flanken des u-Profils 7.1 bilden) wird ein Aufnahmeraum für den inneren Endbereich 9.1 der Distanzplatte 9 gebildet. Jeder der einander gegenüberliegenden Streifen hat zwei Löcher, die aufeinander ausgerichtet sind, um einen durchgehenden Stift der Stiftverbindung 8.1, 8.2 aufzunehmen. Die beiden Stiftverbindungen 8.1 und 8.2 durchdringen also das u-Profil beidseitig entsprechend der Ausführungsart 8.

Die Halterung 3 der Fig. 1 ist im Sinn der Ausführungsart 13 spiegelsymmetrisch bezüglich einer vertikalen Ebene senkrecht zur Fussfläche 5.1. Insbesondere ist die ganze Halterung spiegelsymmetrisch bezüglich der vertikalen Mittelebene, die durch die Distanzplatte 9 definiert ist (die hier genannten Richtungen sind auf die Montageorientierung bezogen). Dies hat den Vorteil, dass die vertikalen Lasten, die die Halterung aufnimmt, optimal über die Dübelanker in das Tragwerk eingeleitet werden. Anders ausgedrückt: Bei vorgegebener Belastbarkeit der Dübelanker kann eine grösstmögliche Last aufgenommen werden. Bei asymmetrischer Gestaltung der Halterung können Momente entstehen, die eine Reduktion der Last pro Halterung erfordern.

In **Fig. 2** ist ein schematischer Querschnitt durch die Distanzplatte 9 gezeigt. Sie hat eine rechteckige Kontur (vgl. Fig. 1) im Sinn der Ausführungsart 6 mit einem inneren Endbereich 9.1 und einen äusseren Endbereich 9.2. Der innere Endbereich 9.1 ist im u-Profil 7.1 des Fussteils 4 aufgenommen. Die Breite des u-Profils entspricht im Wesentlichen der Dicke der Distanzplatte 9, so dass der innere Bereich der Distanzplatte bündig zwischen den Flanken des u-Profils liegt. Für die beiden Stiftverbindungen 8.1, 8.2, welche die Distanzplatte durchstossen, sind im inneren Endbereich 9.1 zwei Löcher 10.1 vorgesehen (sie liegen in der Blickrichtung auf die Fig. 2 hintereinander). Der Durchmesser der Löcher 10.1 ist auf den Durchmesser des Stifts der Stiftverbindung abgestimmt, so dass Loch und Stift im Wesentlichen bündig sind und der Stift an allen Muskovit-Glimmerpapier-Schichten angreifen kann.

Wie in Fig. 2 schematisch dargestellt ist, ist die Distanzplatte 9 ein Schichtpressstoff aus vielen dünnen Muskovit-Glimmerpapier-Schichten 11 (auch Muskovit-Glimmer-Folien genannt). Die einzelnen Muskovit-Glimmerpapier-Schichten bestehen hauptsächlich aus mineralischem Glimmer vom Typ Muskovit. Muskovit wird chemisch mit der folgenden Summenformel definiert:

K Al₂[AlSi₃O₁₀(OH)₂]

Da es sich beim Glimmer vom Typ Muskovit um ein Naturprodukt handelt, sind immer auch unvermeidliche mineralische Verunreinigungen im Muskovit-Glimmerpapier vorhanden. Diese Verunreinigungen haben aber keinen relevanten Einfluss auf die für die Erfindung massgeblichen Eigenschaften der Brandfestigkeit, der mechanischen Stabilität und der Wärmeleitfähigkeit des Muskovit-Glimmerpapiers.

Die Muskovit-Glimmerpapiere haben eine Foliendicke im Bereich von z.B. 0.3 - 0.6 mm. Für eine Distanzplatte einer Dicke von z.B. 5 - 6 mm werden also z.B. 10 - 20 Schichten miteinander verpresst. Als Matrix und Bindemittel zwischen den Muskovit-Glimmerpapier-Schichten ist ein Silikonharz vorhanden. Betrachtet man den Schichtpressstoff als Ganzes, so besteht er praktisch ausschliesslich aus Muskovit-Glimmerpapier und Silikonharz. Diese beiden Komponenten machen typischerweise mindestens 99 Gew.-% des Schichtpressstoffs aus.

Für die Distanzplatte 9 der Fig. 1 wird z.B. eine Zusammensetzung von ca. 90 Gew.-% Muskovit-Glimmerpapier und ca. 10 Gew.-% Silikonharz-Bindemittel gewählt. Dies entspricht der Ausführungsart 2 und auch der Ausführungsart 3.

Die Distanzplatte 9 der Fig. 1 hat z.B. eine Länge von 200 (gemessen vom inneren Ende zum äusseren Ende) mm, eine Breite von z.B. 80 mm (gemessen in vertikaler Richtung der Montageorientierung) und eine Dicke von 5 mm. Dies ergibt ein Verhältnis von Länge zu Dicke von 40 (entsprechend den Ausführungsarten 4 und 5).

Wie in Fig. 2 weiter angedeutet ist, gibt es im äusseren Endbereich 9.2 zwei Löcher 10.1 (sie liegen in der Blickrichtung auf die Fig. 2 hintereinander). Diese dienen zur Befestigung des in Fig. 1 gezeigten Kopfteils 12. Der Kopfteil 12 ist aus einem Aluminium-Strangpressprofilstück gebildet. An diesem ist als Anschlussteil 13 ein u-Profil 14 ausgebildet, dessen Breite an die Dicke der Distanzplatte 9 angepasst ist in einer Weise, wie im Zusammenhang mit dem u-Profil 7.1 des Distanzplattenhalters 7 beschrieben worden ist. Der Kopfteil 12 entspricht also der Ausführungsart 10.

Der Kopfteil 12 hat einen Plattenteil 15, an dessen inneren Ende das u-Profil 14 und an dessen äusseren Ende ein Adapterelement 16.1 in der Form eines c-Profils vorhanden ist. Das c-Profil verläuft in Montageorientierung vertikal, also entlang des Plattenteils 15. Das c-Profil dient zur Fixierung der Fassadenunterkonstruktion (siehe Fig. 4). Als weiteres Adapterelement 16.2 ist ein horizontaler Schlitz vorgesehen, in welchen ein Träger der Fassadenunterkonstruktion eingeschoben werden kann. Damit realisiert der Kopfteil 12 die Ausführungsart 11.

**Fig. 3** zeigt eine weitere Ausführungsform. Die Halterung besteht wiederum aus einem Fussteil 18, einer Distanzplatte 9 und einem Kopfteil 12. Die drei Komponenten sind wiederum über 4 Stiftverbindungen 8.1 - 8.4 verbunden.

Die Stiftverbindungen haben jeweils ein Stiftelement (z.B. Bolzen) und ein Klemmelement (z.B. Niet, Mutter). Sie sind vorzugsweise Nietverbindungen entsprechend der Ausführungsart 12.

Der Fussteil 18 unterscheidet sich vom Fussteil 4 der Ausführungsform der Fig. 1 dadurch, dass es zwei in Montageorientierung übereinander fluchtend angeordnete u-Profile 22.1, 22.2 hat. Das obere u-Profil 22.1 erstreckt sich bis an den oberen Rand der Fussplatte 21, während das untere u-Profil 22.2 sich bis an den unteren Rand der Fussplatte 21 erstreckt. Das Loch 6.3 befindet sich zwischen den beiden u-Profilen 22.1, 22.2. Das Loch 6.3 ist im Zentrum der Fussplatte 18 angeordnet. Insgesamt ist der Fussteil 18 spiegelsymmetrisch zur vertikalen Mittelebene des Fussteils 18 (Ausführungsart 13).

Die Distanzplatte 19 hat eine rechteckige Aussenkontur einer Länge von z.B. 200 mm und einer Breite von z.B. 180 mm. Sie hat zusätzlich eine Ausnehmung 23 am inneren Endbereich. Diese schafft in der Distanzplatte 19 einen Freiraum vor dem Loch 6.3. Die Ausnehmung ermöglicht es, eine Schraube durch das Loch 6.3 beim Befestigen der Halterung an der Gebäudewand einzuführen. In der Draufsicht (also senkrecht zur Plattenebene betrachtet) hat die Distanzplatte 19 im inneren Endbereich zwei Arme oder Stutzen. Die Ausnehmung ist eine Kombination aus einem Rechteck und einem Dreieck (Keilform). Die Dicke der Distanzplatte beträgt z.B. 8 mm.

Der Schichtpressstoff, aus dem die Distanzplatte 19 besteht, hat rund 88 Gew.-% Muskovit-Glimmerpapier und rund 12 Gew.-% Silikonharz-Bindemittel, wobei Spuren von anderen Stoffen aus dem Herstellungsprozess von nicht mehr als 1 Gew.-% vernachlässigt sind. Dies entspricht der Ausführungsart 2 und auch der Ausführungsart 3.

Der Kopfteil 20 hat ein u-Profil 24 mit zwei durchgehenden Löchern (nicht dargestellt) für die Stiftverbindungen 8.3, 8.4. Am Brückenteil des u-Profils 24 schliesst ein Plattenteil 25 an. An diesem sind Adapterelemente, nämlich Löcher 26.1, 26.2 und ein Klemmfinger 26.3 ausgebildet. Der Klemmfinger 26.3 hilft bei der Montage, indem er ein Trägerprofil festklemmen kann, bis es festgeschraubt ist.

Der Kopfteil 20 ist nicht spiegelsymmetrisch bezüglich der vertikalen Ebene (Distanzplattenebene). Vielmehr ist der Plattenteil 25 etwas aus der Mitte verschoben, so dass das Trägerprofil, welches mit dem Klemmfinger 26.3 gehalten ist, in der Ebene der Distanzplatte 19 liegt. Der Kopfteil als Ganzes bildet quasi ein h-förmiges Profil.

**Fig. 4** zeigt schematisch, wie ein Vorbau 30 an einem Tragwerk 2 angebracht ist, so dass eine aussenisolierte Gebäudekonstruktion resultiert. An der Betonwand 27, welche eine Gebäudeaussenwand ist, werden die erfindungsgemässen Halterungen 28.1, 28.2 mit Dübelankern befestigt. Im vorliegenden Beispiel ist der Fussteil der Halterung 28.1, 28.2 mit nur einem Loch für einen Dübelanker ausgestattet.

Wenn die Halterungen 28.1, 28.2 an den bestimmungsgemässen Orten fixiert sind, wird an die Betonwand 27 eine Aussenisolation 29 (z.B. in Form von Stein- oder Glaswolle) verlegt. Die Aussenisolation 29 hat z.B. eine Dicke von 180 mm. Im vorliegenden Beispiel versinken die Halterungen 28.1, 28.2 weitgehend in der Aussenisolation. Es ist jeweils nur noch das äussere Ende des Kopfteils mit den Adapterelementen sichtbar. Als nächstes wird die Unterkonstruktion 30 der Fassade an den Halterungen 28.1, 28.2 aufgehängt. Im vorliegenden Beispiel werden horizontal verlaufende Träger 30.1, 30.2 in die horizontalen Schlitze (vgl. Fig. 1 Adapterelement 16.2) der Kopfteile eingeschoben und fixiert. Danach werden an den Trägern 30.1, 30.2 z.B. weitere Teile (z.B. vertikale Träger) der Unterkonstruktion angebracht. Zuletzt werden die Fassadenplatten (nicht dargestellt) an der Unterkonstruktion aufgehängt.

Zusammenfassend ist festzustellen, dass sich die beschriebenen Ausführungsbeispiele in verschiedenster Weise abwandeln lassen. Insbesondere ist der Fussteil nahezu beliebig anpassbar an die baulichen Besonderheiten des Einzelfalls. Eine beidseitige Einspannung der Distanzplatte über ein u-Profil bringt zwar besondere Vorteile hinsichtlich der mechanischen Belastbarkeit mit sich, ist aber nicht zwingend.

Die Distanzplatte kann je nach Bedarf gerade so lang sein, dass sie vollständig in der Isolationsschicht des Gebäudes eingebettet ist. Sie kann aber auch ohne weiteres aus dieser herausragen und bei einer hinterlüfteten Fassade den Luftraum überbrücken.

Der Kopfteil hat die Aufgabe, eine einfache Montage der Fassadenunterkonstruktion zu ermöglichen. Da es unterschiedlichste Fassadenkonstruktionen gibt, kann die erfindungsgemässe Halterung an die verschiedenen Varianten angepasst werden.

Der Distanzplattenhalter am Fussteil kann in einfachster Weise durch einen Plattenteil (z.B. durch einen Schenkel eines L-Profil-förmigen Fussteils) gebildet sein. In diesem Plattenteil sind z.B. Löcher zum Befestigen der Distanzplatte vorgesehen.

### Bezugszeichenliste:

- 2: Tragwerk
- 3: Halterung
- 4: Fussteil
- 5: Fussplatte
- 5.1: Fussfläche
- 6,1, 6.2: Loch in der Fussplatte
- 7: Distanzplattenhalter
- 7.1: u-Profil

- 8.1, 8.2, 8.3, 8.4: Stiftverbindung (Nietverbindung)
- 9: Distanzplatte
- 9.1: Innerer Endbereich
- 9.2: Äusserer Endbereich
- 10.1, 10.2: Loch
- 11: Muskovit-Glimmerpapier-Schichten
- 12: Kopfteil
- 13: Anschlussteil
- 14: u-Profil
- 15: Plattenteil
- 16.1, 16.2: Adapterelement

- 18: Fussteil
- 19: Distanzplatte
- 20: Kopfteil
- 21: Fussplatte
- 22.1, 22.2: u-Profil
- 23: Ausnehmung
- 24: u-Profil
- 25: Plattenteil
- 26.1, 26.2: Löcher
- 26.3: Klemmfinger
- 27: Betonwand
- 28.1, 28.2: Halterung
- 29: Aussenisolation
- 30: Unterkonstruktion der Fassade
- 30.1, 30.2: Träger

## Patentansprüche

1. Thermisch isolierende Halterung (3) zum Befestigen eines Vorbaus (30) an einem Tragwerk (2), die folgende Komponenten aufweist:
a) einen Fussteil (4), der eine Fussfläche (5.1) zur stabilen Auflage am Tragwerk (2) und einen zur Fussfläche (5.1) senkrecht stehenden Distanzplattenhalter (7) hat,
b) eine Distanzplatte (9) aus einem thermisch isolierenden Material, wobei die Distanzplatte einen inneren Endbereich (9.1) und einen äusseren Endbereich (9.2) hat und wobei die Distanzplatte (9) an ihrem inneren Endbereich (9.1) mindestens zwei durchgehende Löcher (10.1, 10.2) hat,
c) mindestens zwei Stiftverbindungen (8.1, 8.2), welche je eines der mindestens zwei Löcher (10.1) durchstossen und eine mechanisch tragfähige Verbindung zwischen dem Distanzplattenhalter (7) des Fussteils (4) und dem inneren Bereich der Distanzplatte (9) schaffen,
**dadurch gekennzeichnet, dass**
d) die Distanzplatte (9) ein Schichtpressstoff ist, der im Wesentlichen aus Muskovit-Glimmerpapier-Schichten zur Sicherstellung einer hohen Zugfestigkeit des Schichtpressstoffes und aus Silikonharz-Bindemittel als Matrix zum festen Verbinden der Glimmerpapier-Schichten im Schichtpressstoff besteht.

2. Halterung nach Anspruch 1, **dadurch gekennzeichnet, dass** die Muskovit-Glimmerpapier-Schichten einen Anteil von mindestens 85 Gew.-%, insbesondere 88 Gew.-% bis 92 Gew.-%, des Schichtpressstoffs ausmachen.

3. Halterung nach Anspruch 1 oder 2, **dadurch gekennzeichnet, dass** das Silikonharz-Bindemittel einen Anteil von mindestens 2 Gew.-%, insbesondere mindestens 5 Gew.-%, ausmacht, besonders bevorzugt 8 - 12 Gew.-% ausmacht.

4. Halterung nach einem der Ansprüche 1 bis 3, **dadurch gekennzeichnet, dass** die Distanzplatte (9) ein Verhältnis von Länge zu Dicke zwischen 5 und 100, insbesondere von mindestens 10 hat.

5. Halterung nach einem der Ansprüche 1 bis 4, **dadurch gekennzeichnet, dass** die Distanzplatte (9) eine konstante Dicke im Bereich von 2 mm bis 10 mm hat.

6. Halterung nach einem der Ansprüche 1 bis 5, **dadurch gekennzeichnet, dass** die Distanzplatte (9) eine im Wesentlichen rechteckige Aussenkontur hat.

7. Halterung nach einem der Ansprüche 1 bis 6, **dadurch gekennzeichnet, dass** die Distanzplatte (9) an ihrem inneren Endbereich (9.1) eine Ausnehmung (23) hat.

8. Halterung nach einem der Ansprüche 1 bis 7, **dadurch gekennzeichnet, dass** der Distanzplattenhalter (7) mindestens ein u-Profil (7.1) bildet, wobei eine Schlitzbreite des u-Profils (7.1) einer Dicke der Distanzplatte (9) entspricht und wobei die mindestens zwei Stiftverbindungen, welche die Distanzplatte mit dem Fussteil verbinden, das u-Profil beidseitig durchdringen.

9. Halterung nach einem der Ansprüche 1 bis 8, **dadurch gekennzeichnet, dass** sie als weitere Komponente ein Kopfteil (12) mit einem Anschlussteil (13) aufweist, wobei der Anschlussteil (13) mit mindestens zwei weiteren Stiftverbindung (8.3, 8.4) im äusseren Endbereich (9.2) der Distanzplatte (9) mechanisch tragfähig befestigt ist.

10. Halterung nach Anspruch 9, **dadurch gekennzeichnet, dass** der Anschlussteil (13) des Kopfteils (12) mindestens ein u-Profil (14) bildet, das den äusseren Endbereich (9.2) der Distanzplatte (9) beidseitig umgreift.

11. Halterung nach Anspruch 9 oder 10, **dadurch gekennzeichnet, dass** der Kopfteil (12) ein Adapterelement (16), insbesondere einen Klemmfinger, einen Einschubschlitz oder ein c-Profil zum Befestigen des Vorbaus (30) an der Halterung (3) aufweist.

12. Halterung nach einem der Ansprüche 1 bis 11, **dadurch gekennzeichnet, dass** die Stiftverbindungen (8.1, ... 8.4) Nietverbindungen sind.

13. Halterung nach einem der Ansprüche 1 bis 12, **dadurch gekennzeichnet, dass** der Fussteil (4) spiegelsymmetrisch bezüglich einer Ebene senkrecht zur Fussfläche (5.1) ist.

14. Halterung nach einem der Ansprüche 1 bis 13, **dadurch gekennzeichnet, dass** der Fussteil (4) aus einem Aluminium-Strangpress-Profil-Stück gebildet ist.

15. Bauwerk mit einem Tragwerk (2), insbesondere einer Gebäudewand, einer Aussenisolation (29) am Tragwerk (2), einem Vorbau (30), insbesondere einem Fassadenplattensystem, und einer thermisch isolierenden Halterung (3, 28.1, 28.3) nach einem der Ansprüche 1 bis 14, welche den Vorbau (30) am Tragwerk (2) verankert.

## Claims

1. Thermally insulating mount (3) for attaching a front structure (30) to a supporting structure (2), which has the following components:
a) a base part (4), which has a base surface (5.1) for stable support on the supporting structure (2) and a spacer plate holder (7) perpendicular to the base surface (5.1),
b) a spacer plate (9) made of a thermally insulating material, wherein the spacer plate has an inner end section (9.1) and an outer end section (9.2) and wherein the spacer plate (9) has at least two through holes (10.1, 10.2) at its inner end section (9.1),
c) at least two pin connections (8.1, 8.2), each of which penetrates one of the at least two holes (10.1) and creates a mechanically load-bearing connection between the spacer plate holder (7) of the base part (4) and the inner area of the spacer plate (9),
**characterized in that**
d) the spacer plate (9) is a laminate consisting substantially of layers of muscovite mica paper to ensure a high tensile strength of the laminate and of silicone resin binder as matrix for firmly connecting the layers of mica paper in the laminate.

2. Mount according to claim 1, **characterized in that** the muscovite-mica paper layers make up a proportion of at least 85% by weight, in particular 88% to 92% by weight, of the laminate.

3. Mount according to claim 1 or 2, **characterized in that** the silicone resin binder makes up a proportion of at least 2% by weight, in particular at least 5% by weight, and particularly preferably 8 - 12% by weight.

4. Mount according to one of claims 1 to 3, **characterized in that** the spacer plate (9) has a length-to-thickness ratio of between 5 and 100, in particular of at least 10.

5. Mount according to one of claims 1 to **4, characterized in that** the spacer plate (9) has a constant thickness in the range from 2 mm to 10 mm.

6. Mount according to one of claims 1 to 5, **characterized in that** the spacer plate (9) has a substantially rectangular outer contour.

7. Mount according to one of claims 1 to 6, **characterized in that** the spacer plate (9) has a recess (23) at its inner end section (9.1).

8. Mount according to one of claims 1 to 7, **characterized in that** the spacer plate holder (7) forms at least one u-profile (7.1), wherein a slot width of the u-profile (7.1) corresponds to a thickness of the spacer plate (9) and wherein the at least two pin connections, which connect the spacer plate to the base part, penetrate the u-profile on both sides.

9. Mount according to one of claims 1 to 8, **characterized in that** it has as a further component a head part (12) with a connecting part (13), the connecting part (13) being attached in a mechanically load-bearing manner with at least two further pin connections (8.3, 8.4) in the outer end section (9.2) of the spacer plate (9).

10. Mount according to claim 9, **characterized in that** the connecting part (13) of the head part (12) forms at least one u-profile (14) which embraces the outer end section (9.2) of the spacer plate (9) on both sides.

11. Mount according to claim 9 or 10, **characterized in that** the head part (12) has an adapter element (16), in particular a clamping finger, an insertion slot or a c-profile for attaching the front structure (30) to the mount (3).

12. Mount according to one of claims 1 to 11, **characterized in that** the pin connections (8.1, ... 8.4) are rivet connections.

13. Mount according to one of claims 1 to 12, **characterized in that** the base part (4) is mirror-symmetrical with respect to a plane perpendicular to the base surface (5.1).

14. Mount according to one of claims 1 to 13, **characterized in that** the base part (4) is formed from an extruded aluminium profile piece.

15. Building with a supporting structure (2), in particular a building wall, an external insulation (29) on the supporting structure (2), a front structure (30), in particular a facade panel system, and a thermally insulating mount (3, 28.1, 28.3) according to one of claims 1 to 14, which anchors the front structure (30) to the supporting structure (2).

## Revendications

1. Support thermiquement isolant (3) pour la fixation d'un avant-corps (30) à une structure porteuse (2), qui présente les composants suivants :
a) une partie de base (4) qui présente une surface de base (5.1) pour l'appui stable sur la structure porteuse (2) ainsi qu'un support de plaque d'écartement (7) perpendiculaire à la surface de base (5.1),
b) une plaque d'écartement (9) fabriquée à partir d'un matériau thermiquement isolant, dans lequel la plaque d'écartement présente une zone d'extrémité intérieure (9.1) et une zone d'extrémité extérieure (9.2) et dans lequel la plaque d'écartement (9) présente au niveau de sa zone d'extrémité intérieure (9.1) au moins deux trous traversants (10.1, 10.2),
c) au moins deux assemblages à goupilles (8.1, 8.2) qui traversent chacun l'un des au moins deux trous (10.1) et créent un assemblage mécaniquement porteur entre le support de plaque d'écartement (7) de la partie de base (4) et la zone intérieure de la plaque d'écartement (9),
**caractérisé en ce que**
d) la plaque d'écartement (9) est un matériau stratifié qui est constitué essentiellement de couches de papier de mica muscovite pour garantir une résistance à la traction élevée du matériau stratifié et d'un liant à base de résine de silicone en tant que matrice pour l'assemblage solide des couches de papier de mica dans le matériau stratifié.

2. Support selon la revendication 1, **caractérisé en ce que** les couches de papier de mica muscovite représentent une proportion d'au moins 85 % en poids, en particulier de 88 % en poids à 92 % en poids, du matériau stratifié.

3. Support selon la revendication 1 ou 2, **caractérisé en ce que** le liant à base de résine de silicone représente une proportion d'au moins 2 % en poids, en particulier d'au moins 5 % en poids, de manière particulièrement préférée de 8 à 12 % en poids.

4. Support selon l'une des revendications 1 à 3, **caractérisé en ce que** la plaque d'écartement (9) présente un rapport entre la longueur et l'épaisseur compris entre 5 et 100, en particulier d'au moins 10.

5. Support selon l'une des revendications 1 à 4, **caractérisé en ce que** la plaque d'écartement (9) présente une épaisseur constante dans la plage de 2 mm à 10 mm.

6. Support selon l'une des revendications 1 à 5, **caractérisé en ce que** la plaque d'écartement (9) présente un contour extérieur essentiellement rectangulaire.

7. Support selon l'une des revendications 1 à 6, **caractérisé en ce que** la plaque d'écartement (9) présente un évidement (23) au niveau de sa zone d'extrémité intérieure (9.1).

8. Support selon l'une des revendications 1 à 8, **caractérisé en ce que** le support de plaque d'écartement (7) forme un profilé en U (7.1), dans lequel une largeur de fente du profilé en U (7.1) correspond à une épaisseur de la plaque d'écartement (9) et dans lequel les au moins deux assemblages à goupilles qui relient la plaque d'écartement à la partie de base traversent le profilé en U des deux côtés.

9. Support selon l'une des revendications 1 à 8, **caractérisé en ce qu'**il présente en tant qu'autre composant une partie supérieure (12) avec une partie de raccordement (13), dans lequel la partie de raccordement (13) est fixée de manière mécaniquement résistante avec au moins un autre assemblage à goupilles (8.3, 8.4) dans la zone d'extrémité extérieure (9.2) de la plaque d'écartement (9).

10. Support selon la revendication 9, **caractérisé en ce que** la partie de raccordement (13) de la partie supérieure (12) forme un profilé en U (14) qui entoure la zone d'extrémité extérieure (9.2) de la plaque d'écartement (9) des deux côtés.

11. Support selon la revendication 9, **caractérisé en ce que** la partie supérieure (12) présente un élément adaptateur (16), en particulier un doigt de serrage, une fente d'insertion ou un profilé en C pour la fixation de l'avant-corps (30) au support (3).

12. Support selon l'une des revendications 1 à 10, **caractérisé en ce que** les assemblages à goupilles (8.1, ... 8.4) sont des assemblages rivetés.

13. Support selon l'une des revendications 1 à 12, **caractérisé en ce que** la partie de base (4) est symétrique en miroir par rapport à un plan perpendiculaire à la surface de base (5.1).

14. Support selon l'une des revendications 1 à 13, **caractérisé en ce que** la partie de base (4) est formée d'une pièce profilée extrudée en aluminium.

15. Construction comprenant une structure porteuse (2), en particulier une paroi de bâtiment, une isolation extérieure (29) sur la structure porteuse (2), un avant-corps (30), en particulier un système de plaques de façade, et un support thermiquement isolant (3, 28.1, 28.3) selon l'une des revendications 1 à 14, qui ancre l'avant-corps (30) à la structure porteuse (2).
